Europäisches Patentamt

European Patent Office

Office européen des brevets

(11) Publication number: **0 002 271**
**B1**

# EUROPEAN PATENT SPECIFICATION

(45) Date of publication of patent specification: **16.07.86**

(21) Application number: **78101511.0**

(22) Date of filing: **01.12.78**

(51) Int. Cl.⁴: **C 08 F 6/12,** C 08 J 3/12,
C 08 C 2/06

(54) Process for drying a polymer.

(30) Priority: **01.12.77 US 856550**

(43) Date of publication of application:
**13.06.79 Bulletin 79/12**

(45) Publication of the grant of the patent:
**16.07.86 Bulletin 86/29**

(84) Designated Contracting States:
**DE FR GB IT NL**

(56) References cited:
**FR-A-2 257 323**
**FR-A-2 277 838**
**US-A-3 251 428**
**US-A-3 279 087**
**US-A-3 326 781**
**US-A-3 450 183**
**US-A-3 457 248**
**US-A-3 905 102**

**"Drying in Chemical Engineering" M.V. Lykov,
Moscow, Khinia Publishers, 1970, pp. 301-305**

(73) Proprietor: **PHILLIPS PETROLEUM COMPANY
5th and Keeler
Bartlesville Oklahoma 74004 (US)**

(72) Inventor: **King, William Robert
2115 SE Skyline Place
Bartlesville Oklahoma (US)**

(74) Representative: **Dost, Wolfgang, Dr.rer.nat.,
Dipl.-Chem.
Patent- und Rechtsanwälte Bardehle-
Pagenberg-Dost-Altenburg & Partner Postfach
86 06 20
D-8000 München 86 (DE)**

Courier Press, Leamington Spa, England.

## Description

The invention relates to a process for forming polymer particles from a solution of polymer and solvent by evaporating the solvent from the solution.

Many prior art methods are known for the recovery of a polymer from its solution; however, there are many disadvantages to these methods such as water contamination, inefficient use of energy and safety, and health hazards.

A method used in the drying of a polymer is disclosed in US—A—3 450 183 where polymer solution is flashed below the melting point of the polymer to obtain an essentially dry or solid flash residue. The residue is chopped and then dried further by contacting with hot purge gas in a mechanically agitated zone. The polymer is then passed to a vacuum-extruder for final drying of the polymer. The problem is that the method is only operable with those polymers that will flash to form an essentially dry solid, whereas if the polymer solution upon flashing retains enough solvent to be a sticky mass, the equipment will become all fouled up. A rubbery polymer solution is one example wherein after several stages of flash the rubber solution reaches a viscous stage which still is not dry, yet it cannot be pumped or handled otherwise either.

Another method is disclosed in US—A—3 251 428 where a slurry of polyolefin is sprayed into a fluidized bed of polyolefin particles. The slurry coats the particles, then the hot vaporous solvent used to fluidize the bed vaporizes any solvent remaining in the coating. Problems arise, however, when the polymer bed becomes too sticky to fluidize. Safety hazards are increased due to the use of the hydrocarbon as a fluidizing medium. The system, as well, is generally inefficient energy-wise.

In US—A—3 457 248 a polymer solution is confronted in a flash tank by a spinning rotor having radial knives, circumferential hammers, and hard surface fan blades, which chops, and otherwise comminutes the filament-like material emerging from the flashed solution. Once the desired size reduction is achieved by the hammermill, the polymer particles are screened out (column 4, line 33 et seq. and column 2, lines 29 to 33).

The Encyclopedia of Polymer Science and Technology, Vol. 5, pages 209 to 213 in Figures 6 and 8 discloses spray drying by an atomizer wheel (Figure 6) or a pressure spray nozzle (Figure 8) and hot air. Figure 6 has an air-sweeper device rotating just off the flat bottom to keep the product airborne and on the way to the peripheral outlets (page 209, penultimate paragraph). The spray drier of Figure 8 has an internal traveling vane driven by air currents and rotating at roughly 10 to 20 rpm; it serves to limit wall accumulation and improves operating efficiency (paragraph bridging pages 210 and 211).

In M. V. Lykov, Drying in Chemical Engineering, Moscow, Khimia Publishers, 1970, pages 301 to 305 an overheated solution is sprayed over the fluidized bed of the material or directly into the fluidized bed. Upon removal of moisture from the material due to accumulated heat, the material is finally dried up by gases supplied by a combustion chamber disposed downstream of the overheater (page 6, below). The reference relates to aqueous solutions only (page 1) and is applicable especially to heat-resistant solutions (oage 3, lines 5, 6 up of the middle paragraph), such as aqueous solutions of calcium chloride, disodium phosphate, nitrophoska fertilizer pulp etc. (page 4, lines 2, 3 after the Table).

The present invention relates to a process for forming polymer particles from a solution of polymer and solvent by evaporating the solvent from the solution which process is characterized by adding a solution of a polymer which can yield a flowable crumb at a temperature of 11—28°C above the normal boiling point of the solvent into a maintained bed of mechanically agitated polymer particles, the mechanical energy input provided by the mechanical agitation supplying 30 to 65% of the energy required for evaporating the solvent from the solution.

Furthermore, the invention relates to a process for removing solvent from a solution containing polymer and solvent, said process being characterized by removing from 25 to 70% of the solvent by flashing while spraying the solution into a maintained bed of mechanically agitated polymer particles, the mechanical energy input provided by the mechanical agitation supplying from 30 to 65% of the total energy requirement for removing the solvent from the solution.

Furthermore, the invention relates to an apparatus for performing the aforesaid process for forming polymer particles, said apparatus being characterized by a vessel for containing a bed of polymer particles having a polymer inlet and a polymer outlet for removing dry polymer from the bed; agitator means operably associated with the vessel for mechanically agitating the bed of polymer particles to maintain an agitated bed of polymer particles, the mechanical energy input provided by the mechanical agitation supplying 30 to 65% of the energy required for evaporating the solvent from the solution; and spray means for spraying a polymer solution into the mechanically agitated bed of polymer particles.

The invention is to be seen under several aspects. In one aspect, it relates to the recovery of a polymer from a solution by a novel spray drying method. In another aspect, it relates to a method of drying a polymer which cannot be conventionally spray dried by using an agitated bed of relatively dry polymer particles which serves as a heat transfer medium in the process and which offers a nonfouling intangible surface for the impingement of the sprayed droplets. In another aspect, it relates to a method of drying a polymer using an agitated bed wherein the bed is violently agitated with simultaneous grinding of large agglomerates of the polymer. In yet another aspect, it relates to the passing of heated inert gas countercurrent to a bed of polymer particles into which a polymer solution is sprayed for the recovery of polymer from the solution. In a further aspect, dry polymer is recovered from a polymer solution in an evaporation method which is carried out in the absence of any substantial amount of water or stream. In yet another aspect, this invention relates to the recovery of a rubbery polymer from a solution by the removal of solvent through the use of a novel spray drying method. In still another aspect, it relates to a spray drying method in which the bed temperature is controlled by the feed rate, and the discharge rate of dry particles from the bed is controlled by the agitator power input. In still another aspect, this invention relates to a method of drying a polymer by using an agitated bed of relatively dry polymer particles and adding the polymer solution below the surface of the bed. In still another aspect it relates to a method that requires less circulation of stripping gas than previously taught in the art. In yet another aspect it relates to a method of recovering polymer from solution in which the equipment stays relatively clean and dry and is not gummed up with sticky polymer.

The present invention overcomes the problems involved in the prior art methods of recovering a polymer from its solution as it removes the possibility of water contamination in the product, fouling of the equipment, is much more efficient in use of energy, and decreases the risk of many safety and health hazards present in the prior art methods. The present invention heats the polymer solution to a temperature sufficient that upon spraying a major part of the solvent is vaporized. The spray is directed into a bed of dryer polymer particles so that the droplets, which would normally coalesce into a viscous mass, are enveloped by a dense cloud of hot dry polymer particles, thereby avoiding a viscous sticky mass that fouls up the equipment. The remainder of the solvent is removed due to the energy supplied by the heated inert gas passed through .the bed of polymer particles and the mechanical energy from the mechanical agitator. The circulation of drying gas, and thereby the size of the drying vessel and associated equipment, is greatly reduced due to the heat input that is mechanically transmitted by the frictional contacting of the particles with each other and with the agitator paddles. The intense shear forces generated by the agitator can also, for some polymers, act to reduce any agglomerates to a powder thus maintaining the large surface area needed for the process without grinding and recirculating the fines. As well; the use of an inert gas, for example, $N_2$, decreases the risk of safety hazards as to fire and health hazards with respect to breathing hydrocarbon gases. The problems arising through the use of water in a solvent stripping process, is also eliminated due to eliminating the direct use of water or steam.

The present invention also contemplates the use of a grinder, if necessary, to grind the larger agglomerates of polymer in the bed with recycling of the fines. The mechanical agitation can be such that a vortex is formed at the top of the bed, tending to thereby fling the larger agglomerates of polymer particles to the sides of the vessel. A grinder can then scoop up the large agglomerates and grind them to fines, with the fines being recycled. The use of the grinder will facilitate the expediency of the process and keep the larger particles from consuming the entire bed as the lumps will be ground before growing large enough to disturb the operation. The grinder, therefore, makes continuous operation possible. The intense shear forces developed in the bed by the mechanical agitator tend to break down agglomerates as they form, however. In some situations this can be sufficient to make a separate grinder unnecessary.

The present invention is applicable to any polymer solution which can yield a flowable crumb at a temperature of 20—50°F (11—28°C) above the normal boiling point of the solvent in the environment of intense mechanical agitation found in the evaporator tank. Most rubbery polymer solutions, particularly butadiene-styrene rubber solutions, meet this requirement. The process is also applicable to polymers which remain semi-fluid even when dry and cold, e.g., high cis-polybutadiene polymer solutions, as the tendency for the soft particles to agglomerate is partially overcome by the mechanical agitator ripping the bed apart and maintaining a major part of the bed in particulate form.

Operation of the invention is usually at a temperature between the boiling point of the solvent and the softening point of the polymer. For example, in the drying of a butadiene-styrene rubber copolymer in a solution of cyclohexane, the preferred operation temperature is 190—195°F (88—91°C). Higher temperatures, however, can be used in conjunction with higher agitator speeds as the higher agitator speeds largely overcome the problem of stickiness. Operation at a temperature below the boiling point of the solvent is possible but at the expense of a longer residence time. Operation below atmospheric pressure, however, is effective in reducing the temperature of the solvent's boiling point, yet maintaining a nonsticky crumb without the penalty of a long residence time.

In the process of the invention of drying a polymer in solution or recovering the polymer from solution, the solution of polymer is first heated to a temperature sufficient to vaporize a substantial portion of the solvent upon flashing. The preheating temperature must not be such as to cause thermal degradation of the polymer, but a maximum temperature without thermal degradation can be used. In the case of a rubbery polymer solution such as butadiene-styrene copolymer in cyclohexane, the temperature for preheating can reach 400°F (204°C) without adverse effects of thermal degradation being encountered. The preferred temperature range for preheating the rubbery polymer is 300—400°F (149—205°C).

Once the polymer solution has been sufficiently heated, the solution is flashed by spraying into a mechanically agitated bed of dry polymer particles. The flashing of the solvent yields droplets of higher solids content. Generally, 25—70 percent of the solvent is removed in the spray flash depending on the characteristics of the polymer, the viscosity of the solution, and its concentration. In regard to the concentration of the polymer solution, the polymer solution can be concentrated by flashing in one or more stages before it is heated and sprayed into the mechanically agitated bed of polymer particles of the present invention. The droplets formed, which would normally coalesce into a viscous mass, are then enveloped by a dense cloud of hot, dry polymer particles. The dry polymer weight of the cloud exceeds the dissolved polymer weight by 10 to 1. The resulting form is agglomerates having a sticky droplet as a core and a coating of dry polymer on the surface. The average solids is 78 percent with it ranging from 25 percent at the center to 100 percent (dry) solids at the surface of the agglomerate.

The bed of polymer particles is mechanically agitated in such a manner that a significant amount of energy is put into the system by mechanical agitation, i.e., the mechanical energy input supplies 30—65 percent of the total energy requirement for the drying process.

The remainder of the energy required for the drying process is supplied by passing a hot inert gas countercurrent to the polymer particles. The gas is passed under such conditions that its energy, along with that being put into the system by mechanical agitation, removes substantially all the remaining solvent from the polymer. Besides carrying heat into the system, the hot inert gas acts as a stripping agent to aid in the removal of the solvent from the polymer. The inert gas can also be recovered and recycled.

The gas is inert, preferably $N_2$, in order to reduce the safety and health hazards of using a hydrocarbon gas such as cyclohexane and to minimize oxidation of the hot polymer. Besides $N_2$, examples of other inert gases which can be used are $CO_2$ and fuel gas. The temperature of the inert gas is usually fixed at some temperature above the normal boiling point of the solvent, but below the softening point of the polymer. In the case of drying a butadiene-styrene rubbery copolymer in solution in cyclohexane, an operating temperature of 190—225°F (88—107°C) is preferred. Since this temperature is above the boiling point of the solvent cyclohexane, the solvent will be vaporized and carried off, yet the polymer will not stick to the equipment since the temperature is either below the softening point of the polymer or the temperature exceeds the softening point only to the extent that the shear forces generated by the agitator are greater than the forces of the polymer causing it to stick. A polymer crumb that is sticky and forms a lump when at rest is entirely different when shear foces are applied thereto. Forces rendering the polymer sticky are small compared to the internal shear forces generated by the agitator. Normally "sticky" material remains free flowing in a highly agitated bed, but will block into a lump after it is removed and is in a static state. At extreme conditions, e.g., operating temperatures that greatly exceed 225°F (107°C) in the case of drying a butadiene-styrene copolymer, "stickiness" can become a problem despite the input of mechanical agitation.

The temperature of the bed can be kept controlled either by the constant countercurrent circulation of the inert gas through the bed of polymer particles or by controlling the rate at which the polymer solution is added to the bed as the more polymer solution added the lower the temperature of the bed whereas the temperature of the bed will tend to increase as less polymer solution is added. The temperature at which the bed is kept is a temperature at which the polymer particles would not tend to be sticky in the highly agitated bed. The temperature of the bed would depend upon the polymer and the solvent. The temperature at which the bed is kept can be substantially the same as the temperature of the inert gas circulating therethrough. For a butadiene-styrene copolymer bed and $N_2$ as the inert gas, the bed is kept at 190—225°F (88—107°C). The amount of circulation of the inert gas is greatly reduced in the present invention due to the input of energy by the mechanical agitation.

The agitation of the bed of dry polymer particles can be so violent as to create a vortex of particles, thus throwing the oversize agglomerates toward the vessel wall. The agglomerates can then be scooped into a grinder and ground into fine polymer particles which are returned to the bed. The recycling of the fines can occur immediately, at the top of the bed; or the fines can be reintroduced at the bottom of the bed along with the inert gas stream; or anywhere along the bed of polymer particles.

For some polymers, however, a vortex is not essential as it is possible to lower the nozzle into the heart of the agitated bed rather than just spraying onto the surface of a vortex. The polymer solution is, therefore, added below the surface of the bed with flashing still occurring simultaneously and the polymer being dried by mechanical agitation and inert gas stripping. The invention contemplates, therefore, the addition of the polymer solution below the surface of the bed.

Due to the intense shear forces developed in the bed by the agitator, some polymers do not tend to form any agglomerates as the shear forces tend to break down agglomerates as they form. The grinder, therefore, is optional and is generally unnecessary when violent agitation (e.g., 0.5—2 horsepower per pound of polymer (0.82—3.3 kW per kg of polymer) in the bed) is used.

Polymer particles of the bed can be removed from the bottom of the bed, however, and passed to a blower-grinder. The particles are then ground and recycled to the top of the bed or at some intermediate point. In this manner a fresh supply of fine, dry polymer particles is always available for the bed. The rate of discharge of polymer from the vessel may also be controlled by a slide valve which is automatically controlled by the motor load of the mechanical agitator. The greater the load on the motor, the more the gate is opened, the smaller the load on the motor, the more the gate closes. Since the motor load depends on the weight of the bed, this is an acceptable control means of automatically controlling the depth of the bed.

The invention is applicable to any polymer solution which can yield a flowable crumb at a temperature of 20—50°F (11—28°C) above the normal boiling point of the solvent. That is, the invention can be used on any solution of a normally solid polymer which can be particulated in a spraying device and is not unduly sticky at the temperatures necessary to evaporate the solvent. Suitable polymers include polymers and copolymers of butadiene, styrene, isoprene and polyolefins. The solvents used will, of course, depend on the polymer to be processed.

Most rubber solutions meet the requirements, therefore, the invention is especially applicable to solutions of rubbery polymers. One specific rubber solution is that of a rubbery copolymer of 75 weight percent butadiene and 25 weight percent styrene in a solvent of cyclohexane.

As to the equipment used in the present invention, all equipment is conventional with the exception of the agitated bed. This unit can be somewhat similar to densifiers or polishers which are commercially available from equipment manufacturers such as Wedco, Inc., West Memphis, Arkansas. The essential features of the agitated bed are: (1) it presents a violently agitated surface of particles as to the spray of polymer solution in such a manner that there is little, if any, opportunity for the spray to impact equipment surfaces; (2) the surface and design of agitator paddes are such that at an agitator speed of several hundred RPM the bed is completely mixed (this also serves to carry heat generated below the surface of the bed up to the surface where the heat demand exists) and efficiently contacted with the purge gas while providing sufficient frictional resistance to permit high power input to the agitator; and (3) the vessel should have sufficient volume to provide adequate holdup of the polymer particles. It has been found that an agitator speed in the range of 300 to 2,000 RPM is desirable, depending on the diameter of the vessel, with 600 to 1800 RPM preferred, the speed tending to be lower for larger size equipment. A holdup time of 5—30 minutes is generally adequate, with a time of 10—20 minutes preferred. The vessel can be vertically or horizontally disposed, but the vertical position is generally preferred since it provides a somewhat uniform bed, permits a vapor disengaging zone in the top of the vessel, and serves to seal off the discharge opening from the vapor space. A length/diameter ratio of $2\frac{1}{2}$ or more is preferred to provide good countercurrent contacting of the polymer particles with the purge gas. Work input to the agitator is generally sufficient to evaporate 5 to 50 percent of the solvent in the feed with 20 to 30 percent being typical for a 13 weight percent rubber solution.

Referring now to the drawings,

FIGURE 1 shows the general scheme of a vertical bed continuous process.

FIGURE 2 shows the general scheme of a horizontal bed continuous process, and

FIGURE 3 shows a method for control of the process, as well as an optional grinder at the discharge of the bed with the polymer passing to a holding polisher for final drying.

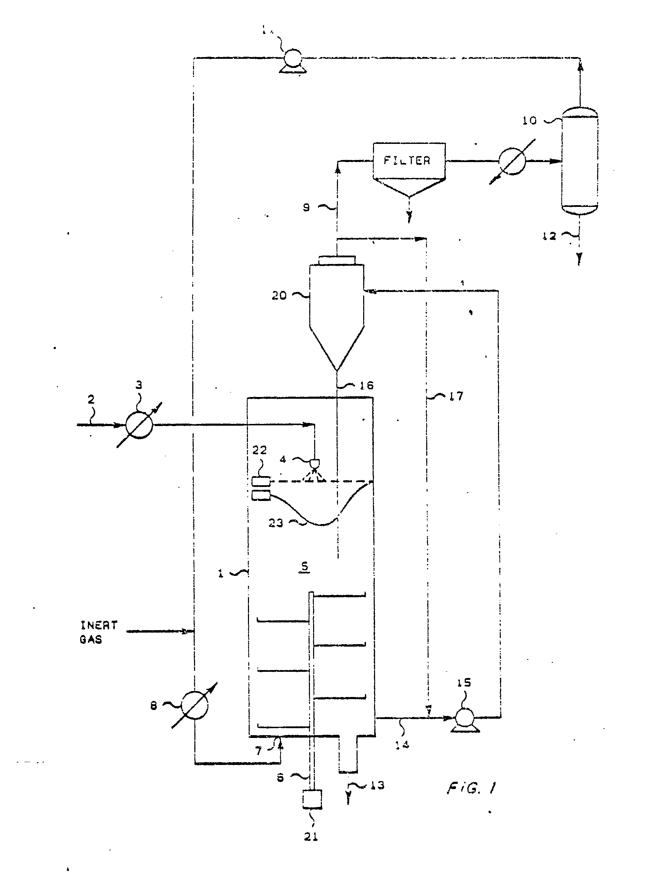

Figure 1 shows the present invention using a vertical bed 1 of dry polymer particles. The feed 2 comprises a polymer solution with the polymer being a rubbery polymer such as a butadiene-styrene copolymer and the solvent being a typical solvent used in conjunction with the polymer, e.g., cyclohexane. The feed first passes through a preheater 3, which heats the feed to a temperature sufficient to vaporize a substantial portion of the solvent upon flashing. In the case of a butadiene-styrene rubber copolymer in cyclohexane solvent, the feed is heated to about 350°F (177°C). The heated polymer solution is then flashed while sprayed, 4, into a bed of substantially dry polymer particles 5. The bed of polymer particles consists of the same polymer as in the polymer solution, i.e., butadiene-styrene copolymer. In the case of a non-grindable polymer such as high cis-polybutadiene (cis-4), the bed can initially be made up of any convenient polymer powder and gradually displaced by the polymer from the polymer solution. The bed of dry particles is kept at a constant temperature through the input of energy by the mechanical agitator 6, a countercurrent flow of inert gas entering at the bottom of the bed 7, and the rate of addition of polymer solution feed. For the butadiene-styrene rubber copolymer, the bed is kept at a constant temperature of 225°F (107°C). The inert gas, preferably $N_2$, is heated at the inert gas heater 8 to 225°F (107°C) and circulated through the bed so that the energy from the gas and the mechanical stirrer is sufficient to keep the bed at the constant temperature of 225°F (107°C). The volume of $N_2$ can be as high as ten times the volume of solvent vapor, and, because it is in countercurrent flow, the discharge rubber is in contact with the hottest and dryest $N_2$.

The inert gas flow also strips solvent from the surface and interstices of the agglomerate to keep it dry and nonsticky on the outside. The temperature does not need to be as high as the boiling point of the solvent—it could even be room temperature, but the residence time would be much longer. Solvent vapor from the flash or from the stripping action of the inert gas is removed via cyclone 20 through conduit 9 which carries the solvent vapor and inert gas to condenser-inert gas separator 10. Liquid solvent is then transported by conduit 12 to further use or storage, and the inert gas passes through compressor 11, heater 8, and enters the bed of dry particles at 7.

Dry polymer is removed from the bed through conduit 13 at the rate that polymer is fed into the bed through the feed and recycle 16. Conventional valve apparatus for removing polymer from a stripping zone can be used, such as a screw discharge and rotary valves. The discharge can also be controlled by a slide valve which is automatically controlled by the load on the motor 21. Part of the dry polymer can be recycled by passing through conduit 14 to blower-grinder 15, which grinds the agglomerated particles into a fine dust, and reenters the bed at 16. Inert gas via conduit 17 helps carry the particles through conduit 14. Thereby, the process is continuous, and it is assured that fine, dry polymer will be available at the top of the bed to coat the partially dried polymer sprayed into the bed.

FIGURE 1 also shows a grinder 22 at the surface of the polymer bed 5. A vortex 23 is formed due to the violent agitation of mechanical agitator 6. The formation of the vortex due to the violent agitation also causes the larger agglomerates to polymer to be flung to the sides of the bed where they are scooped into the grinder 22 and ground into fines. The fines can be recycled immediately onto the top of the bed or recycled at the bottom of the bed or at some intermediate point.

The grinder is optional as considerable grinding of the polymer particles can occur in the blower-grinder 15. The grinder may also be unnecessary as the shear forces developed in the bed by the agitator will at times, depending on the polymer and degree of mechanical agitation, be sufficient to break down the agglomerates as they form.

The creation of a vortex surface 23 is also not always necessary as the nozzle 4 can be located below the surface of the bed.

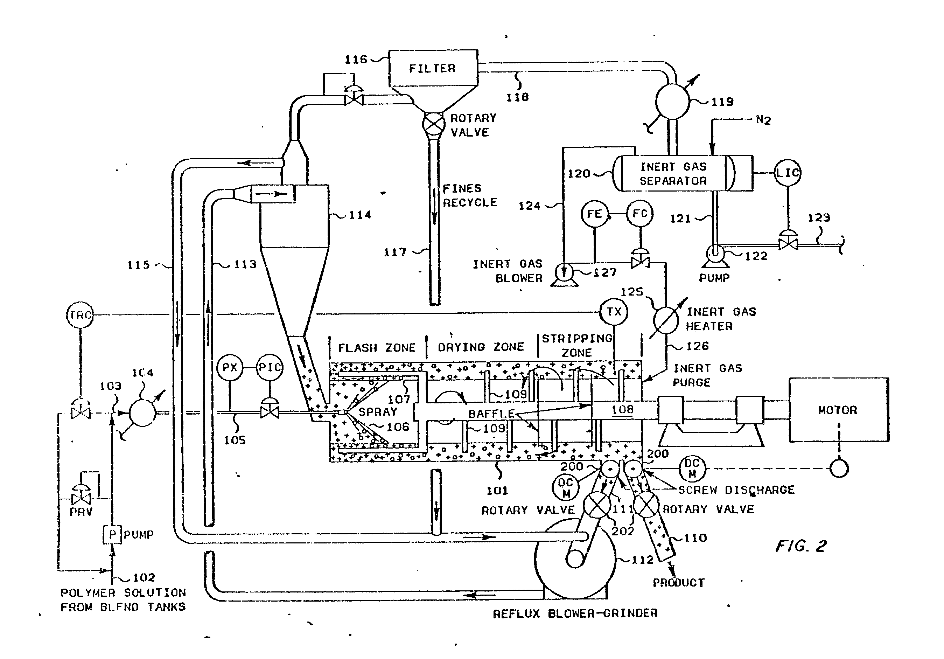

FIGURE 2 shows the present invention in conjunction with a horizontal bed 101. The polymer solution is passed via conduits 102 and 103 to heater 104 where it is preheated to the appropriate temperature. The heated polymer solution is then passed by way of 105 into bed 101 where it is flashed and sprayed into the bed of dry polymer particles 106, 107.

The bed is stirred by mechanical agitator 108, 109 and inert gas is passed countercurrent to the polymer particles. Dry product is taken from the bed for further use by conduit 110 while other dry polymer product is removed by way of conduit 111 and passed to blower-grinder 112. The polymer is removed through conventional apparatus such as screw discharge means 200 and rotary valves 202. Once at the blower-grinder, the polymer particles are then ground to fines and recycled to the feed end of the bed by way of 113 and cyclone 114.

Gases containing fines from the top of the cyclone are passed through conduit 115 back to blower-grinder 112.

Inert purge gas and stripped or flashed solvent passes up through the cyclone and to filter 116 to remove any fines carried with the gases. The fines filtered from the gases are then returned to the bed by way of conduit 117, blower-grinder 112, conduit 113, and cyclone 114. The filtered gases and vapors are then passed through conduit 118 through condenser 119 and inert gas separator 120. The liquid solvent is then removed by conduit 121 and pumped by pump 122 through conduit 123 to storage or further use. The inert gas is passed through conduit 124 via blower 127 to heater 125 and then introduced into the product end of the bed of dry polymer particles at 126.

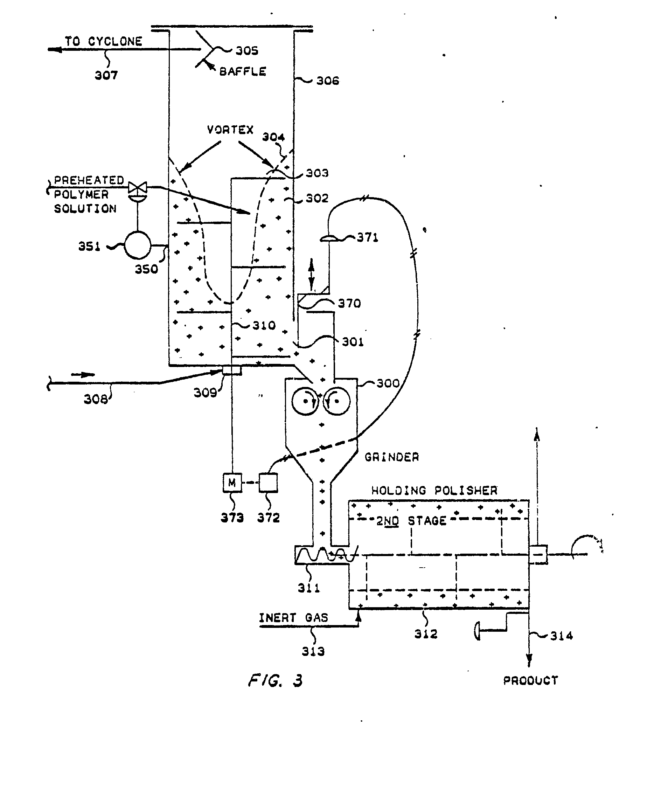

FIGURE 3 shows a vertical bed that differs from that shown in FIGURE 1 in that an optional grinder 300 is located at the discharge 301 of the bed 302.

In the Figure, preheated polymer solution is added 303 onto the surface of the vortex 304. Baffle 305 is used to help separate dust from the vapor that passes out the top of vessel 306 and via conduit 307 to cyclone separator (not shown), a condenser, a heater, and recycled via 308 as the counter-current inert gas purge. The gas purge may enter the vessel through the shaft seal 309 of mechanical agitator 310 in order to help cool the seal and exclude air.

As mentioned above, polymer is discharged through 301 to grinder 300, the polymer then passing via a screw conveyor 311, or some other suitable means to a holding polisher 312. The holding polisher also receives a gas purge 313 for final drying. The polisher is conventional equipment, e.g., such as the holding polisher manufactured by Wedco, Inc., and rotates at low speed, e.g., 60—100 RPM. Vapor recirculation is not shown, but obviously may be used. The product is removed from the polisher at 314.

When a two-stage drying system is used as shown in FIGURE 3, an inert gas purge in vessel 306 and in polisher 312, the volume of the inert gas purge in vessel 306 will be very nominal, sometimes as small as less than one volume per volume of solvent vapor. A more substantial purge rate is used in the second stage polisher, e.g., equal to about 10 volumes per volume of solvent. Since the volume of solvent removed in the polisher, or second stage is very small, e.g., less than one percent of the total solvent removed, a high purge rate of inert gas (up to 10 times the solvent volume) can be easily tolerated in the polisher since the actual volume of inert gas used would still be quite small.

Also shown in FIGURE 3 is one possible method of controlling the process. Thermocouple 350 measures the temperature of bed 302. The information is received by the control means 351 which thereby automatically adjusts the rate of polymer solution flow into the bed. The control means can be any suitable control means known in the art. The temperature of the bed is thereby automatically controlled as control means 351 adjusts the feed rate to allow more solution to be added if the temperature of the bed is too high in order to lower the temperature of the bed, and to decrease the rate of solution flow when the temperature of the bed is too low in order to allow the temperature of the bed to rise to the predetermined temperature.

A control means for the discharge of polymer particles from vessel 306 is also shown. Slide valve 370 regulates the discharge rate of the polymer particles, and the slide valve is controlled by control means 371. The control means can be pneumatic-type operation or any suitable control means known in the art. The control means 371 controls the slide valve 370 upon receiving a signal from motor lead measuring device 372. The motor load measuring device measures the load on motor 373, control means receives the data signal and accordingly adjusts the slide valve. The depth of the bed is thereby automatically controlled as the motor load is dependent upon the weight of the bed. Therefore, when the motor load is great, meaning great depth of the bed, the motor load measuring means senses the load and feeds the information to the control means 371 which will then open the slide valve in order to increase the polymer discharge rate. This will continue until the predetermined depth is reached, thereby the predetermined load to the motor is obtained. When the load on the motor is small, however, the control means automatically lowers the slide valve in order to decrease the discharge rate until the predetermined level is reached.

**Claims**

1. A process for forming polymer particles from a solution of polymer and solvent by evaporating the solvent from the solution characterized by adding a solution of a polymer which can yield a flowable crumb at a temperature of 11—28°C above the normal boiling point of the solvent into a maintained bed of mechanically agitated polymer particles, the mechanical energy input provided by the mechanical agitation supplying 30 to 65% of the energy required for evaporating the solvent from the solution.

2. A process as defined in claim 1 characterized in that the polymer of the particles of the bed is different from the polymer of the solution.

3. A process as defined in claim 1 characterized in that the polymer of the particles of the bed is the same as the polymer of the solution.

4. A process as defined in claim 3 characterized in that the polymer solution comprises a rubbery polymer.

5. A process as defined in claim 4 characterized in that the rubbery polymer solution in solvent is sprayed onto the rubbery polymer particles of the mechanically agitated bed of rubbery polymer particles.

6. A process as defined in claim 5 characterized in that the bed of rubbery polymer particles having rubbery polymer solution in solvent sprayed thereon is agitated by stirring.

7. A process as defined in claim 6 characterized in that the bed of rubbery polymer particles having rubbery polymer solution in solvent sprayed thereon is stirred sufficiently to maintain the temperature of the bed of rubbery polymer particles above the boiling point of the solvent of the rubbery polymer solution.

8. A process for removing solvent from a solution containing polymer and solvent characterized by removing from 25 to 70% of the solvent by flashing while spraying the solution into a maintained bed of mechanically agitated polymer particles, the mechanical energy input provided by the mechanical agitation supplying from 30 to 65% of the total energy requirement for removing the solvent from the solution.

9. A process as defined in claim 8 characterized in that the polymer solution is preheated before flash spraying.

10. A process as defined in claim 8 or 9 characterized by circulating a drying gas, through the thus mechanically agitated bed.

11. A process as defined in claim 10 characterized by heating the drying gas to a gas temperature in a temperature range above the boiling point of the solvent but below the softening point of the polymer to form a heated gas stream.

12. A process as defined in claim 11 characterized in that the heated gas stream is passed countercurrently to the polymer particles under conditions of temperature and pressure sufficient to remove remaining solvent.

13. A process as defined in at least one of claims 8 to 12 characterized by
mechanically agitating the bed of polymer particles to form a vortex therein;
spraying the polymer solution onto the surface of the thus formed vortex, the vortex throwing oversize agglomerates of polymer to a position at which the oversize agglomerates can be scooped into a grinder;
grinding the oversize agglomerates into fine polymer particles; and
returning the thus-ground fine polymer particles to the bed of polymer particles.

14. A process as defined in at least one of claims 8 to 12 characterized in that the polymer solution is sprayed into the bed of polymer below the surface of the bed.

15. A process as defined in at least one of claims 8 to 14 characterized in that the bed is mechanically agitated by violent agitation in the range of 0.82 to 3.3 kW per kg (0.5—2 horsepower per pound) of polymer processed.

16. A process as defined in at least one of claims 8 to 15 characterized by
removing polymer particles from the bottom of the bed of polymer particles:
grinding the thus removed particles; and
recycling the thus ground particles to the bed.

17. A process as defined in at least one of claims 8 to 16 characterized in that the polymer solution is a rubbery polymer solution which can yield a flowable crumb at a temperature of 11 to 28°C above the normal boiling point of the solvent in the mechanically agitated bed of polymer particles.

18. A process as defined in claim 17 characterized in that

the rubbery polymer solution is a solution of butadiene-styrene rubbery copolymer;

the solvent is cyclohexane; and

the polymer solution is preheated to a temperature in the range of 149 to 205°C.

19. A process as defined in claim 18 characterized in that the drying gas is heated to a temperature of 88 to 107°C before passing said drying gas through the bed of dry polymer particles, the drying gas is $N_2$, and the butadiene-styrene rubbery copolymer is a 75 weight percent butadiene-25 weight percent styrene copolymer.

20. A process as defined in claim 19 characterized in that the bed of dry polymer particles, by control of the passage of drying gas and the mechanical agitation, is kept at a temperature of 88 to 107°C.

21. A process as defined in at least one of claims 8 to 20 characterized in that the rate of adding the polymer solution into the mechanically agitated bed of substantially dry polymer particles is automatically controlled by control means which senses the temperature of the bed and thereby controls the rate of feed of polymer solution proportional to the temperature of the bed in order to maintain the temperature of the bed constant.

22. A process as defined in at least one of claims 8 to 21 characterized in that substantially dry polymer particles are removed from the bottom of the bed and the rate of discharge of said particles is automatically controlled by control means which senses the load on the motor of the mechanical agitator and proportionally adjusts a control means, preferably a slide valve near the bottom of the bed, for the discharge of the particles from the bed depending upon the motor load in order to maintain the depth of the bed at a desired level.

23. Apparatus for performing the process according to claim 1 characterized by

a vessel (1) for containing a bed of polymer particles having a polymer inlet and a polymer outlet for removing dry polymer from the bed;

agitator means (6) operably associated with the vessel for mechanically agitating the bed of polymer particles to maintain an agitated bed of polymer particles, the mechanical energy input provided by the mechanical agitation supplying 30 to 65% of the energy required for evaporating the solvent from the solution; and

spray means (4) for spraying a polymer solution into the mechanically agitated bed of polymer particles.

24. Apparatus as defined in claim 23 characterized in that the agitator means further comprises

agitator paddles for mixing the bed of polymer particles; and

motor means (21) for driving the agitator paddles.

25. Apparatus as defined in claim 24 characterized in that the motor means (21) is effective to drive the agitator paddles at a speed in the range of 300 to 2000 RPM, preferably in the range of 600 to 1800 RPM.

26. Apparatus as defined in claim 24 or 25 characterized in that the motor means (21) is effective to introduce mechanical energy into the bed in the range of 0.82 to 3.3 kW per kg (0.5—2 horsepower per pound) of polymer in the bed.

27. Apparatus as defined in at least one of claims 23 to 26 characterized by preheater means (3) connected in flow communication with the spray means (4) for preheating a polymer solution to a temperature sufficient to vaporize from 25 to 70% of the solvent of the polymer solution upon flashing.

28. Apparatus as defined in at least one of claims 23 to 27 characterized in that

the vessel (1) has a gas inlet (7) and a gas outlet (16) and by

inert gas means (11, 8) in flow communication with the gas inlet for passing inert gas countercurrent to the bed of polymer particles.

29. Apparatus as defined in claim 28 characterized in that the inert gas means further comprises an inert gas heater (8) for heating the inert gas to be passed counter-currently to the bed of polymer particles.

30. Apparatus as defined in at least one of claims 23 to 29 characterized by recycle means for recycling a portion of dry polymer to the bed of polymer particles, the recycle means comprising

a blower grinder (15);

conduit means (14) for conveying dry polymer from the vessel (1) to the blower grinder;

a cyclone filter (20) having an inlet, an overhead outlet, and a fines outlet (16);

conduit means for conveying fines from the blower dryer to the inlet of the cyclone filter; and

means for conveying fines from the fines outlet of the cyclone filter to the polymer inlet of the vessel.

31. Apparatus as defined in claim 30 characterized by

filter means for filtering polymer fines from gases having an inlet and an outlet;

conduit means (9) for conveying gases containing fines from the overhead outlet of the cyclone filter (20) to the inlet of the filter means; and

conduit means for conveying polymer fines from the filter means to the polymer inlet of the vessel.

32. Apparatus as defined in claim 31 characterized by conduit means (17) for conveying polymer fines and gases from the overhead outlet of the cyclone filter to the blower dryer (15).

33. Apparatus as defined in claim 30 or 31 characterized by grinder means (22) at the surface of the polymer bed for removing agglomerates of polymer and grinding the removewd agglomerates into fines.

34. Apparatus as defined in at least one of claims 31 to 33 characterized by

a grinder (300) attached in flow communication to the polymer outlet (301) of the vessel (306) for

## 15  0 002 271  16

receiving polymer therefrom and having a grinder outlet;

a holding polisher (312) having an inlet and an outlet and preferably rotating at a speed in the range of 60 to 100 RPM, and

a screw conveyer (311) for conveying polymer particles from the grinder outlet to the inlet of the holding polisher.

## Revendications

1. Procédé pour la formation de particules de polymères à partir d'une solution de polymère et de solvant par évaporation du solvant à partir de la solution, caractérisé par l'addition d'une solution d'une polymère qui peut donner des copeaux présentant une aptitude à l'écoulement à une température de 11—28°C au-dessus du point normal d'ébullition du solvant à un lit maintenu de particules de polymère agitées mécaniquement, l'énergie mécanique appliquée qui est fournie par l'agitation mécanique représentant 30 à 65% de l'énergie requise pour l'évaporation du solvant à partir de la solution.

2. Procédé selon la revendication 1, caractérisé en ce que le polymère des particules du lit est différent du polymère de la solution.

3. Procédé selon la revendication 1, caractérisé en ce que le polymère des particules du lit est le même que le polymère de la solution.

4. Procédé selon la revendication 3, caractérisé en ce que la solution de polymère comprend un polymère caoutchouteux.

5. Procédé selon la revendication 4, caractérisé en ce que la solution de polymère caoutchouteux dans le solvant est pulvérisée sur les particules de polymères caoutchouteux du lit agité mécaniquement de particules de polymère caoutchouteux.

6. Procédé selon la revendication 5, caractérisé en ce que le lit de particules de polymère caoutchouteux ayant la solution de polymère caoutchouteux dans le solvant pulvérisée dessus est remué par agitation.

7. Procédé selon la revendication 6, caractérisé en ce que le lit de particules de polymère caoutchouteux ayant la solution de polymère caoutchouteux dans le solvant pulvérisée dessus est agité suffisamment pour maintenir la température du lit de particules de polymère caoutchouteux au-dessus du point d'ébullition du solvant de la solution de polymère caoutchouteux.

8. Procédé pour extraire un solvant d'une solution contenant un polymère et un solvant, caractérisé par l'extraction de 25 à 70% du solvant par évaporation rapide, alors qu'il y a pulvérisation de la solution pour la faire entrer dans un lit maintenu de particules de polymère agitées mécaniquement, l'énergie mécanique appliquée qui est fournie par l'agitation mécanique représentant de 30 à 65% de l'énergie totale nécessaire à l'extraction du solvant à partir de la solution.

9. Procédé selon la revendication 8, caractérisé en ce que la solution de polymère est préchauffée avant la pulvérisation à évaporation rapide.

10. Procédé selon la revendication 8 ou 9, caractérisé par la mise en circulation d'un gaz de séchage, à travers le lit ainsi agité mécaniquement.

11. Procédé selon la revendication 10, caractérisé par le chauffage du gaz de séchage à une température de gaz dans une gamme de température au-dessus du point d'ébullition du solvant mais au-dessous de point de ramollissement du polymère de manière à former un courant gazeux chauffé.

12. Procédé selon la revendication 11, caractérisé en ce que le courant de gaz chauffé circule à contre-courant des particules de polymère dans des conditions de température et de pression suffisantes pour extraire le solvant restant.

13. Procédé selon au moins l'une des revendications 8 à 12, caractérisé par:

— l'agitation mécanique du lit de particules de polymère de manière à y former un tourbillon;

— la pulvérisation de la solution de polymère sur la surface du tourbillon ainsi formé, le tourbillon projetant des agglomérats surdimensionnés de polymère jusqu'à une position à laquelle les agglomérats surdimensionnés peuvent être recueillis pour entrer dans un broyeur;

— le broyage des agglomérats surdimensionnés pour donner de fines particules de polymère; et

— le renvoi des fines particules de polymère ainsi broyées au lit de particules de polymère.

14. Procédé selon au moins l'une des revendications 8 à 12, caractérisé en ce que la solution de polymère est pulvérisée de manière à entrer dans le lit de polymère au-dessous de la surface du lit.

15. Procédé selon l'une au moins des revendications 8 à 14, caractérisé en ce que le lit est agité mécaniquement par une agitation violente allant de 0,82 à 3,3 kW par kg de polymère traité.

16. Procédé selon l'une au moins des revendications 8 à 15, caractérisé par:

— l'extraction des particules de polymère à partir du fond du lit de particules de polymère;

— le broyage des particules ainsi extraites; et

— le recyclage dans le lit des particules ainsi broyées.

17. Procédé selon l'une au moins des revendications 8 à 16, caractérisé en ce que la solution de polymère est une solution de polymère caoutchouteux qui peut donner des copeaux présentant l'aptitude à l'écoulement à une température de 11 à 28°C au-dessus du point normal d'ébullition du solvant dans le lit agité mécaniquement de particules de polymère.

18. Procédé selon la revendication 17, caractérisé en ce que la solution de polymère caoutchouteux est une solution de copolymère caoutchouteux de butadiène-styrène;

— le solvant est du cyclohexane; et

— la solution de polymère est pré-chauffée à une température comprise entre 149 et 205°C.

19. Procédé selon la revendication 18, caractérisé en ce que le gaz de séchage est chauffé à une température de 88 à 107°C avant que ce gaz de séchage traverse le lit de particules sèches de polymère, le gaz de séchage est $N_2$, et le copolymère caoutchouteux de butadiène-styrène est un copolymère de 75% en poids de butadiène et de 25% en poids de styrène.

20. Procédé selon la revendication 19, caractérisé en ce que le lit de particules sèches de polymère par commande du passage du gaz de séchage et de l'agitation mécanique, est maintenu à une température de 88 à 107°C.

21. Procédé selon l'une au moins des revendications 8 à 20, caractérisé en ce que le taux d'addition de la solution de polymère dans le lit agité mécaniquement de particules sensiblement sèches de polymère est commandé automatiquement par un moyen de commande qui détecte la température du lit et donc commande le débit d'alimentation de la solution de polymère proportionnellement à la température du lit de manière à maintenir constante la température du lit.

22. Procédé selon l'une au moins des revendications 9 à 21, caractérisé en ce que des particules de polymère sensiblement sèches sont extraites du fond du lit et le débit de décharge des particules est commandé automatiquement par un moyen de commande qui détecte la charge du moteur de l'agitateur mécanique et règle proportionnellement un moyen de commande, de préférence un robinet-vanne à proximité du fond du lit, pour la décharge de particules à partir du lit en fonction de la charge du moteur dans le but de maintenir la profondeur du lit à un niveau désiré.

23. Dispositif pour l'exécution du procédé selon la revendication 1, caractérisé par:
— un récipient (1) pour contenir un lit de particules de polymère, ayant un orifice d'entrée de polymère et un orifice de sortie de polymère pour l'extraction du polymère à sec à partir du lit;
— un moyen d'agitateur (6) associé fonctionnellement au récipient pour agiter mécaniquement le lit de particules de polymère et maintenir un lit agité de particules de polymère, l'énergie mécanique appliquée qui est fournie par l'agitation mécanique représentant de 30 à 65% de l'énergie nécessaire à l'évaporation du solvant à partir de la solution; et
— un moyen de pulvérisation (4) pour pulvériser une solution de polymère dans le lit agité mécaniquement de particules de polymère.

24. Dispositif selon la revendication 23, caractérisé en ce que le moyen d'agitateur comprend en outre:
— des pales d'agitateur pour mélanger le lit de particules de polymère; et
— un moyen de moteur (21) pour commander les pales de l'agitateur.

25. Dispositif selon la revendication 24, caractérisé en ce que le moyen de moteur (21) permet d'entraîner les pales d'agitateur à une vitesse comprise entre 300 et 2000 tours/minute, de préférence comprise entre 600 et 1800 tours/minute.

26. Dispositif selon la revendication 24 ou 25, caractérisé en ce que le moyen de moteur (21) permet d'introduire de l'énergie mécanique dans le lit dans une plage allant de 0,82 à 3,3 kW par kg de polymère dans le lit.

27. Dispositif selon l'une au moins des revendications 23 à 26, caractérisé par un moyen de préchauffage (3) communiquant par fluide avec le moyen de pulvérisation (4) pour pré-chauffer une solution de polymère à une température suffisante pour vaporiser de 25 à 70% du solvant de la solution de polymère lors de l'évaporation rapide.

28. Dispositif selon l'une au moins des revendications 23 à 27, caractérisé en ce que:
— le récipient (1) comporte un orifice d'entrée de gaz (7) et un orifice de sortie de gaz (16), et
— un moyen de gaz inerte (11, 8) communique par fluide avec l'orifice d'entrée de gaz pour faire passer du gaz inerte à contre-courant dans le lit de particules de polymère.

29. Dispositif selon la revendication 28, caractérisé en ce que le moyen de gaz inerte comprend en outre un dispositif de chauffage (8) de gaz inerte afin de chauffer le gaz inerte devant circuler à contre-courant dans le lit de particules de polymère.

30. Dispositif selon l'une au moins des revendications 23 à 29, caractérisé par un moyen de recyclage afin de recycler une partie de polymère sec dans le lit de particules de polymère, ce moyen de recyclage comprenant:
— un broyeur-souffleur (15);
— un moyen de conduite (14) pour acheminer du polymère sec entre le récipient (1) et le broyeur-souffleur;
— un filtre à cyclone (20) comportant un orifice d'entrée, un orifice de sortie en hauteur et un orifice de sortie de fines (16);
— un moyen de conduite pour acheminer les fines du souffleur-sécheur à l'orifice d'entrée du filtre à cyclone; et
— un moyen pour acheminer les fines entre l'orifice de sortie des fines du filtre à cyclone et l'orifice d'entrée de polymère du récipient.

31. Dispositif selon la revendication 30, caractérisé par:
— un moyen de filtre pour le filtrage de fines de polymère à partir des gaz, ayant un orifice d'entrée et un orifice de sortie;
— un moyen de conduite (9) pour acheminer les gaz contenant des fines entre l'orifice de sortie en hauteur du filtre à cyclone (20) et l'orifice d'entrée du moyen de filtre; et
— un moyen de conduite pour acheminer les fines de polymère entre le moyen de filtre et l'orifice d'entrée de polymère du récipient.

32. Dispositif selon la revendication 31, caractérisé par un moyen de conduite (17) pour acheminer les fines de polymère et les gaz entre l'orifice de sortie en hauteur du filtre à cyclone et le séchoir-souffleur (15).

33. Dispositif selon la revendication 30 ou 31, caractérisé par un moyen de broyeur (22) à la surface du lit du polymère pour enlever les agglomérats de polymère et broyer en fines les agglomérats enlevés.

34. Dispositif selon l'une au moins des revendications 31 à 33, caractérisé par:

— un broyeur (300) fixé de manière à communiquer par fluide avec l'orifice de sortie de polymère (301) du récipient (306) afin d'en recevoir du polymère et comportant un orifice de sortie de broyeur;

— un polisseur à maintien (312) ayant un orifice d'entrée et un orifice de sortie et tournant de préférence à une vitesse comprise entre 60 et 100 tours/minute, et

— un convoyeur à vis (311) pour acheminer les particules de polymère de l'orifice de sortie du broyeur à l'orifice d'entrée du polisseur.

**Patentansprüche**

1. Verfahren zur Bildung von Polymerteilchen aus einer Lösung aus Polymerem und Lösemittel durch Verdampfen des Lösemittels aus der Lösung, dadurch gekennzeichnet, daß man eine Lösung eines Polymeren, welches bei einer Temperatur von 11 bis 28°C oberhalb des normalen Siedepunktes des Lösemittels fließfähige Krümel zu bilden vermag, einem aufrechterhaltenen Bett von mechanisch bewegten Polymerteilchen zuführt, wobei die durch die mechanische Bewegung verursachte Zufuhr an mechanischer Energie 30 bis 65% der zur Verdampfung des Lösemittels aus der Lösung benötigten Energie liefert.

2. Verfahren nach Anspruch 1, dadurch gekennzeichnet, daß das Polymere der Teilchen des Bettes verschieden vom Polymeren der Lösung ist.

3. Verfahren nach Anspruch 1, dadurch gekennzeichnet, daß das Polymere der Teilchen des Bettes das gleiche wie das Polymere der Lösung ist.

4. Verfahren nach Anspruch 3, dadurch gekennzeichnet, daß die Polymerlösung ein kautschukartiges Polymeres enthält.

5. Verfahren nach Anspruch 4, dadurch gekennzeichnet, daß man die Lösung des kautschukartigen Polymeren im Lösemittel auf die Teilchen aus kautschukartigem Polymerem des mechanisch bewegten Bettes von Teilchen aus kautschukartigem Polymerem aufsprüht.

6. Verfahren nach Anspruch 5, dadurch gekennzeichnet, daß man das Bett von Teilchen aus kautschukartigem Polymerem, auf das die Lösung des kautschukartigen Polymeren im Lösemittel aufgesprüht wird, durch Rühren bewegt.

7. Verfahren nach Anspruch 6, dadurch gekennzeichnet, daß man das Bett von Teilchen aus kautschukartigem Polymerem, auf das die Lösung des kautschukartigen Polymeren im Lösemittel aufgesprüht wird, so rührt, daß man die Temperatur des Bettes von Teilchen aus kautschukartigem Polymerem oberhalb des Siedepunktes des Lösemittels der Lösung des kautschukartigen Polymeren hält.

8. Verfahren zur Entfernung von Lösemittel aus einer Polymeres und Lösemittel enthaltenden Lösung, dadurch gekennzeichnet, daß man 25 bis 70% des Lösemittels durch Entspannungsverdampfung beim Sprühen der Lösung in das aufrechterhaltene Bett von mechanisch bewegten Polymerteilchen entfernt, wobei die durch die mechanische Bewegung verursachte Zufuhr an mechanischer Energie 30 bis 65% der zur Entfernung des Lösemittels aus der Lösung benötigten Gesamtenergie liefert.

9. Verfahren nach Anspruch 8, dadurch gekennzeichnet, daß man vor dem Sprühen unter Entspannungsverdampfung die Lösung des Polymeren vorwärmt.

10. Verfahren nach Anspruch 8 oder 9, dadurch gekennzeichnet, daß man ein Trocknungsgas durch das so mechanisch bewegte Bett zirkuliert.

11. Verfahren nach Anspruch 10, dadurch gekennzeichnet, daß man zur Bildung eines erhitzten Gasstromes das Trocknungsgas auf eine Gastemperatur in einem Temperaturbereich oberhalb des Siedepunktes des Lösemittels, jedoch unterhalb des Erweichungspunktes des Polymeren erhitzt.

12. Verfahren nach Anspruch 11, dadurch gekennzeichnet, daß man den erhitzten Gasstrom unter zur Entfernung von verbleibendem Lösemittel ausreichenden Temperatur- und Druckbedingungen gegenläufig zu den Polymerteilchen führt.

13. Verfahren nach zumindest einem der Ansprüche 8 bis 12, gekennzeichnet durch

mechanisches Bewegen des Bettes von Polymerteilchen zur Bildung eines Wirbeltrichters darin;

Sprühen der Lösung des Polymeren auf die Oberfläche des so gebildeten Wirbeltrichters, wobei der Wirbeltrichter Agglomerate des Polymeren mit Übergröße zu einer Stelle schleudert, an der die Agglomerate mit Übergröße in ein Mahlwerk geschaufelt werden können;

Mahlen der Agglomerate mit Übergröße zu feinteiligen Polymerteilchen; und

Zurückführen der so gemahlenen feinteiligen Polymerteilchen zu dem Bett von Polymerteilchen.

14. Verfahren nach zumindest einem der Ansprüche 8 bis 12, dadurch gekennzeichnet, daß man die Lösung des Polymeren unterhalb der Oberfläche des Bettes in das Bett aus Polymerem sprüht.

15. Verfahren nach zumindest einem der Ansprüche 8 bis 14, dadurch gekennzeichnet, daß man das Bett durch heftige Bewegung im Bereich von 0,82 bis 3,3 kW pro kg (0,5 bis 2 horse power per pound) behandeltem Polymerem mechanisch bewegt.

16. Verfahren nach zumindest einem der Ansprüche 8 bis 15, gekennzeichnet durch

Entfernen de Polymerteilchen vom Boden des Bettes von Polymerteilchen;

Mahlen der so entfernten Teilchen; und

Rückführen der so gemahlenen Teilchen zu dem Bett.

17. Verfahren nach zumindest einem der Ansprüche 8 bis 16, dadurch gekennzeichnet, daß die Lösung des Polymeren eine Lösung eines kautschukartigen Polymeren ist, welche in dem mechanisch bewegten Bett von Polymerteilchen bei einer Temperatur von 11 bis 28°C oberhalb des normalen Siedepunktes des Lösemittels fließfähige Krümel zu bilden vermag.

18. Verfahren nach Anspruch 17, dadurch gekennzeichnet, daß die Lösung des kautschukartigen Polymeren eine Lösung von kautschukartigem Butadien-Styrol Copolymerem ist; das Lösemittel Cyclohexan ist; und die Lösung des Polymeren auf eine Temperatur im Bereich von 149 bis 205°C vorgewärmt wird.

19. Verfahren nach Anspruch 18, dadurch gekennzeichnet, daß man das Trocknungsgas, bevor man es durch das Bett von trockenen Polymerteilchen leitet, auf eine Temperatur von 88 bis 107°C erhitzt, daß das Trocknungsgas N₂ ist, und daß das kautschukartige Butadien-Styrol Copolymere ein Copolymeres aus 75 Gewichtsprozent Butadien und 25 Gewichtsprozent Styrol ist.

20. Verfahren nach Anspruch 19, dadurch gekennzeichnet, daß man durch Regelung der Durchleitung des Trocknungsgases und der mechanischen Bewegung das Bett von trockenen Polymerteilchen auf einer Temperatur von 88 bis 107°C hält.

21. Verfahren nach zumindest einem der Ansprüche 8 bis 20, dadurch gekennzeichnet, daß man die Geschwindigkeit der Zugabe der Lösung des Polymeren in das mechanisch bewegte Bett von im wesentlichen trockenen Polymerteilchen durch eine Regeleinrichtung automatisch regelt, die die Temperatur des Bettes mißt und dadurch die zur Temperatur des Bettes proportionale Geschwindigkeit des Einbringens der Lösung des Polymeren regelt, um die Temperatur des Bettes konstant zu halten.

22. Verfahren nach zumindest einem der Ansprüche 8 bis 21, dadurch gekennzeichnet, daß man die im wesentlichen trockenen Polymerteilchen vom Boden des Bettes entfernt, und daß man die Austragsgeschwindigkeit der Teilchen durch eine Regeleinrichtung automatisch regelt, die die Motorbelastung der mechanischen Bewegungseinrichtung mißt und proportional dazu eine Regeleinrichtung, bevorzugt ein Schieberventil in der Nähe des Bodens des Bettes, zum Austragen der Teilchen aus dem Bett in Abhängigkeit von der Motorbelastung, einstellt, um die Tiefe des Bettes in einer gewünschten Höhe zu halten.

23. Vorrichtung zur Durchführung des Verfahrens nach Anspruch 1, gekennzeichnet durch einen Behälter (1) zur Aufnahme eines Bettes von Polymerteilchen, mit einem Polymereinlaß und einem Polymerauslaß zum Entfernen von trockenem Polymerem aus dem Bett; wirksam mit dem Behälter verbundene Bewegungseinrichtungen (6) zum mechanischen Bewegen des Bettes von Polymerteilchen, um ein bewegtes Bett von Polymerteilchen aufrechtzuerhalten, wobei die durch die mechanische Bewegung verursachte Zufuhr an mechanischer Energie 30 bis 65% der zur Verdampfung des Lösemittels aus der Lösung benötigten Energie liefert; und Sprüheinrichtungen (4) zum Sprühen einer Lösung eines Polymeren in das mechanisch bewegte Bett von Polymerteilchen.

24. Vorrichtung nach Anspruch 23, dadurch gekennzeichnet, daß die Bewegungseinrichtungen weiterhin Bewegungspaddel zum Mischen des Bettes von Polymerteilchen; und Motoren (21) zum Antrieb der Bewegungspaddel enthalten.

25. Vorrichtung nach Anspruch 24, dadurch gekennzeichnet, daß die Motoren (21) so ausgelegt sind, daß die Bewegungspaddel mit einer Geschwindigkeit im Bereich von 300 bis 2000 Umdrehungen pro Minute, bevorzugt von 600 bis 1800 Umdrehungen pro Minute, angetrieben werden.

26; Vorrichtung nach Anspruch 24 und 25, dadurch gekennzeichnet, daß die Motoren (21) so ausgelegt sind, daß dem Bett mechanische Energie im Bereich von 0,82 bis 3,3 kW/kg (0,5 bis 2 horse power per pound) Polymerem im Bett zugeführt wird.

27. Vorrichtung nach zumindest einem der Ansprüche 23 bis 26, gekennzeichnet durch eine mit den Sprüheinrichtungen (4) in Fließverbindung stehende Vorwärmeeinrichtung (3) zum Vorwärmen einer Lösung eines Polymeren auf eine Temperatur, die ausreicht, um 25 bis 70% des Lösemittels der Polymerlösung unter Entspannung zu verdampfen.

28. Vorrichtung nach zumindest einem der Ansprüche 23 bis 27, dadurch gekennzeichnet, daß der Behälter (1) einen Gaseinlaß (7) und einen Gasauslaß (16) hat, und gekennzeichnet durch Inertgaseinrichtungen (11, 8) in Fließverbindung mit dem Gaseinlaß, um Inertgas gegenläufig zu dem Bett von Polymerteilchen zu führen.

29. Vorrichtung nach Anspruch 28, dadurch gekennzeichnet, daß die Inertgaseinrichtungen weiterhin eine Inertgasheizung (8) zum Erhitzen des gegenläufig zum Bett von Polymerteilchen zu führenden Inertgases aufweisen.

30. Vorrichtung nach zumindest einem der Ansprüche 23 bis 29, gekennzeichnet durch Rückführeinrichtungen zum Ruckführen eines Teils des trockenen Polymeren zu dem Bett von Polymerteilchen, wobei die Rückführeinrichtungen enthalten ein Gebläsemahlwerk (15); Führungseinrichtungen (14) zum Transport von trockenem Polymerem vom Behälter (1) zum Gebläsemahlwerk; einen Cyclonfilter (20) mit einem Einlaß, einem obenliegenden Auslaß und einem Auslaß für Feinanteile (16); Führungseinrichtungen zum Transport von Feinanteilen von Gebläsetrockner zum Einlaß des Cyclonfilters; und Transporteinrichtungen zum Transport der Feinanteile vom Auslaß für Feinanteile des Cyclonfilters zum Polymereinlaß des Behälters.

31. Vorrichtung nach Anspruch 30, gekennzeichnet durch Filtereinrichtungen zum Ausfiltern von Polymerfeinanteilen aus Gasen, mit einem Einlaß und einem Auslaß; Führungseinrichtungen (9) zum Transport von Feinanteilen enthaltenden Gasen vom obenliegenden Auslaß des Cyclonfilters (20) zum Einlaß der Filtereinrichtungen; und Führungseinrichtungen zum Transport von Polymerfeinanteilen von den Filtereinrichtungen zum Polymereinlaß des Behälters.

32. Vorrichtung nach Anspruch 31, gekennzeichnet durch Führungseinrichtungen (17) zum Transport von Polymerfeinanteilen und Gasen vom obenliegenden Auslaß des Cyclonfilters zum Gebläsetrockner (15).

33. Vorrichtung nach Anspruch 30 oder 31, gekennzeichnet durch Mahlvorrichtungen (22) an der Oberfläche des Polymerbettes zum Entfernen von Agglomeraten des Polymeren und zum Mahlen der entfernten Agglomerate zu Feinanteilen.

34. Vorrichtung nach zumindest einem der Ansprüche 31 bis 33, gekennzeichnet durch

ein Mahlwerk (300), das in Fließverbindung am Polymerauslaß (301) des Behälters (306) angebracht ist, um daraus das Polymere zu entnehmen, und das einen Mahlauslaß aufweist;

einen Haltepolierer (312) mit einem Einlaß und einem Auslaß, der bevorzugt mit einer Geschwindigkeit im Bereich von 60 bis 100 Umdrehungen pro Minute läuft; und einen Schraubenförderer (311) zum Transport der Polymerteilchen vom Mahlauslaß zum Einlaß des Haltepolierers.

FIG. 1

FIG. 2

0 002 271

FIG. 3